# EUROPÄISCHE PATENTANMELDUNG

(11) **EP 2 629 081 A1**
(43) Veröffentlichungstag der Anmeldung: **21.08.2013**
(21) Anmeldenummer: 13000183.7
(22) Anmeldetag: 15.01.2013
(51) Int. Cl.: G01N 21/35, G01V 5/00

(54) **Verfahren und Vorrichtung zur Untersuchung von Postsendungen in Hinblick auf gefährliche Inhaltsstoffe**

(30) Priorität: 17.02.2012 DE 102012003201
(71) Anmelder: Hübner GmbH, 34123 Kassel (DE)
(72) Erfinder: Hübsch, Daniel, 34119 Kassel (DE); Sprenger, Thorsten, 34253 Lohfelden (DE)
(74) Vertreter: Walther, Walther & Hinz GbR

(57) **Zusammenfassung**

Verfahren zur Untersuchung von Postsendungen in Hinblick auf gefährliche Inhaltsstoffe, wobei in einem ersten Schritt die Postsendung derart durchleuchtet wird, dass die Konturen des Inhalts der Postsendung sichtbar werden, wobei nach einer Evaluation des Inhalts der Postsendung an vorbestimmbaren Stellen der Postsendung in einem zweiten Schritt eine Spektralanalyse des Inhalts der Postsendung erfolgt.

## Beschreibung

Die Erfindung betrifft sowohl ein Verfahren als auch eine Vorrichtung zur Untersuchung von Postsendungen in Hinblick auf gefährliche Inhaltsstoffe.

Es kommt immer wieder vor, dass Personen, die im Lichte der Öffentlichkeit stehen, aus welchen Gründen auch immer an sie adressierte Post mit gefährlichem Inhalt, insbesondere sogenannte Briefbomben erhalten. Derartige Briefbomben werden bereits in der Postverteilstelle, beispielsweise eines Ministeriums, ausgesondert, wobei jedoch auch diese Personen, die mit einer Aussonderung solcher gefährlicher Postsendungen beschäftigt sind, an Leib und Leben gefährdet sind.

Insofern ist bereits bekannt durch spektroskopische Untersuchungen zu versuchen Kenntnis davon zu erhalten, ob der Inhalt der Postsendung gefährlich ist also beispielsweise Sprengstoff enthält oder nicht. Häufig befindet sich in solchen Briefbomben der Sprengstoff nur in einem Teilbereich der Postsendung. Insofern wird bislang die gesamte Postsendung in Abständen von beispielsweise zwei Zentimetern spektroskopisch untersucht. Die Zeitdauer für einen jeden solchen Untersuchungsschritt ist etwa mit 1 Minuten zu beziffern. Ist ein solcher Brief insofern komplett spektroskopisch untersucht, ist häufig eine Zeit von bis zu einer Stunde vergangen. Bei einer Vielzahl ankommender Briefe ist insofern eine spektroskopische Untersuchung einer Mehrzahl derartiger Briefe allein aus zeitlichen Gründen kaum möglich.

Die der Erfindung zugrunde liegende Aufgabe besteht darin, die Zeitdauer der Untersuchung von Postsendungen in Hinblick auf einen gefährlichen Inhalt zu verkürzen.

Zur Lösung der Aufgabe wird bei einem Verfahren zur Untersuchung von Postsendungen im Hinblick auf gefährliche Inhaltsstoffe insofern vorgeschlagen, in einem ersten Schritt die Postsendung derart zu durchleuchten, dass die Konturen des Inhalts der Postsendung sichtbar werden, wobei nach einer Evaluation des Inhalts der Postsendung an vorbestimmbaren Stellen der Postsendung eine Spektralanalyse des Inhalts der Postsendung erfolgt. Unter Kontur versteht man die äußeren Umrisse eines Gegenstands, z. B. eines metallischen Gegenstands. Handelt es sich bei dem äußeren Material des Gegenstands allerdings um ein solches, das von den Strahlen durchdrungen wird, erhält man durch diese Konturen auch Aufschlüsse über den Inhalt der innenliegenden Gegenstände.

Hieraus wird deutlich, dass nun nicht mehr die gesamte Postsendung einer Spektralanalyse unterzogen wird, sondern nur noch die Stellen der Postsendung, an denen sich beispielsweise aufgrund einer vorherigen Durchleuchtung mittels Röntgenstrahlung oder durch Scannen mittels Millimeter- oder Submillimeterwellen (Terahertzwellenbereich) die Vermutung ergibt, dass dort möglicherweise gefährliche Inhaltsstoffe, z. B. Sprengstoff, zu finden sind. Es hat sich herausgestellt, dass durch eine solche Evaluation, beispielsweise eines Röntgenbildes einer Postsendung, bereits mit erheblicher Sicherheit vorhergesagt werden kann, an welcher Stelle sich entsprechend problematische Stoffe befinden können. Insofern konnte auch die Zeitdauer für die Untersuchung einer Postsendung drastisch reduziert werden. Als Spektralapparate kommen solche Spektralapparate zum Einsatz, die im Terahertzwellenbereich, insbesondere im Bereich zwischen 0,1 und 5 Terahertz arbeiten.

Gegenstand der Erfindung ist ebenfalls eine Vorrichtung zur Detektion gefährlicher Stoffe in einer Postsendung, wobei die Vorrichtung erfindungsgemäß einen Spektralapparat und eine Aufnahmeeinrichtung mit einem Tisch für die Postsendung aufweist, wobei der Tisch durch die Aufnahmeeinrichtung und/oder der Spektralapparat in X- und Y-Richtung verfahrbar in der Vorrichtung angeordnet ist. Hierbei wird davon ausgegangen, dass eine Postsendung bereits z. B. einer Röntgenuntersuchung unterzogen worden ist, und aufgrund des Röntgenbildes die Stellen erkennbar sind, an denen gefährliche Stoffe zu vermuten sind. Nach Auflage der Postsendung auf den Tisch der Aufnahmeeinrichtung, wobei der Tisch in X- und Y-Richtung im kartesischen Koordinatensystem durch die Aufnahmeeinrichtung unter dem Spektralapparat verfahrbar ist, können nunmehr die Stelle oder die Stellen angefahren werden, an denen wie bereits ausgeführt gefährliche Stoffe zu vermuten sind.

Eine besonders vorteilhafte Ausführungsform der Vorrichtung zeichnet sich dadurch aus, dass die Vorrichtung eine Durchleuchtungseinrichtung für die Postsendung aufweist. Das heißt, die Vorrichtung weist eine Kombination aus einer Durchleuchtungseinrichtung und einem Spektralapparat auf, insbesondere in Form eines Spektralapparates, der im Terahertzwellenbereich zwischen 0,1 und 5 Terahertz arbeitet. Hiermit kann sowohl die Durchleuchtung beispielsweise mittels Röntgenstrahlung oder Millimeter- oder Submillimeterwellenstrahlung als auch die anschließende Spektralanalyse in einer Vorrichtung vorgenommen werden, was zu einer weiteren erheblichen Zeitersparnis führt.

Nach einem weiteren besonderen Merkmal der Erfindung ist vorgesehen, dass die Vorrichtung eine Einrichtung zur Darstellung der durchleuchteten Postsendung aufweist, also beispielsweise einen Bildschirm, auf dem die durchleuchtete Postsendung dargestellt ist. Ist die Postsendung vor der Untersuchung durch den Spektralapparat bereits durchleuchtet worden, so ist erforderlich, dass bei der Durchleuchtung die Postsendung in der Durchleuchtungseinrichtung fotografisch erfasst wird, damit bei der spektroskopischen Untersuchung diese bildliche Darstellung als Referenz für die Anordnung der Postsendung auf der Aufnahmeeinrichtung dienen kann. Gegebenenfalls können etwaige Markierungen auf der Postsendung angebracht werden, um sicherzustellen, dass tatsächlich die Orientierung der Postsendung unter dem Spektralapparat auf der Aufnahmeeinrichtung identisch ist mit der bei der Durchleuchtung der Postsendung.

Des Weiteren ist vorgesehen, dass die Aufnahmeeinrichtung für die Postsendung in der Vorrichtung in den Erfassungsbereich sowohl des Spektralapparates als auch der Durchleuchtungseinrichtung verfahrbar ist. Hieraus wird deutlich, dass quasi in einen Arbeitsgang durch die Vorrichtung die Postsendung sowohl durchleuchtet als auch einer Spektralanalyse unterzogen wird. Erstreckt sich die Aufnahmeeinrichtung mit dem Tisch für die Postsendung sowohl unter den Spektralapparat als auch unter die Durchleuchtungseinrichtung, dann ist die Aufnahme einer Fotografie der Postsendung entbehrlich, da sich an der Orientierung der Postsendung im Übergang zwischen der Durchleuchtungseinrichtung einerseits und dem Spektralapparat andererseits nichts ändert.

Nach einem weiteren Merkmal der Erfindung ist vorgesehen, dass der Tisch in Z-Richtung verfahrbar ist, wodurch sich die Möglichkeit ergibt, nicht nur Briefe zu untersuchen, sondern beispielsweise auch Päckchen oder kleine Pakete. Im einfachsten Fall geschieht dies dadurch, dass die Aufnahmeeinrichtung mit dem Tisch vertikal, also in Z-Richtung verstellbar ist.

Anhand der Zeichnungen wird die Erfindung nachstehend beispielhaft näher erläutert.
- Fig. 1: zeigt schematisch die Vorrichtung in einer Seitenansicht;
- Fig. 2: zeigt eine Ansicht gemäß der Linie II-II aus Fig. 1.

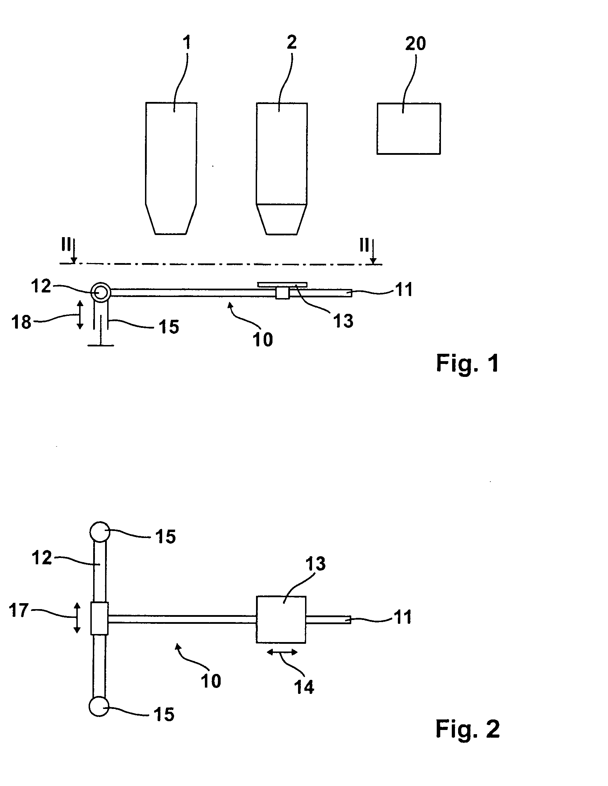

Aus der Darstellung gemäß Fig. 1 ist eine Röntgeneinrichtung oder Millimeterwellenscanner 1 erkennbar sowie ein daneben angeordneter Spektralapparat 2. Unterhalb sowohl der Durchleuchtungseinrichtung in Form des Röntgenapparates oder des Millimeterwellenscanners befindet sich die Aufnahmeeinrichtung 10 mit dem Tisch 13 für die Postsendung. Die Aufnahmeeinrichtung umfasst zwei Schienen, von denen die eine Schiene 11 in X-Richtung und die andere Schiene 12 in Y-Richtung ausgerichtet ist. Die in X-Richtung ausgerichtete Schiene 11 ist hierbei auf der Schiene 12 in Y-Richtung (Pfeil 17) verfahrbar. Die Schiene 11 zeigt darüber hinaus den Tisch 13, der ebenfalls auf der Schiene 11 entlang des Pfeiles 14 verfahrbar ist. Zur Verfahrbarkeit sowohl in der Schiene 11 auf der Schiene 12 als auch zur Verfahrbarkeit des Tisches 13 auf der Schiene 11 können elektromotorische Antriebe vorgesehen sein. Für die Verfahrbarkeit des Tisches 13 in Z-Richtung (Pfeil 18) sind Kolbenzylinderantriebe 15 an der Aufnahmeeinrichtung 10 vorgesehen. Darüber hinaus ist in Fig. 1 ein Bildschirm 20 erkennbar, auf dem beispielsweise das Röntgenbild der Postsendung darstellbar ist, um erkennen zu können, an welcher Stelle die Spektralanalyse vorgenommen werden soll.

### Bezugszeichenliste:

- 1: Röntgeneinrichtung/Millimeterwellenscanner
- 2: Spektralapparat
- 10: Aufnahmeeinrichtung
- 11: Schiene (in X-Richtung)
- 12: Schiene (in Y-Richtung)
- 13: Tisch
- 14: Pfeil
- 15: Kolbenzylinderantriebe
- 17, 18: Pfeil
- 20: Bildschirm

## Patentansprüche

1. Verfahren zur Untersuchung von Postsendungen in Hinblick auf gefährliche Inhaltsstoffe, wobei in einem ersten Schritt die Postsendung derart durchleuchtet wird, dass die Konturen des Inhalts der Postsendung sichtbar werden, wobei nach einer Evaluation des Inhalts der Postsendung an vorbestimmbaren Stellen der Postsendung in einem zweiten Schritt eine Spektralanalyse des Inhalts der Postsendung erfolgt.

2. Verfahren nach Anspruch 1,
**dadurch gekennzeichnet,**
**dass** die Durchleuchtung durch eine Strahlung im Röntgen- oder Terahertzwellenbereich erfolgt.

3. Vorrichtung zur Detektion gefährlicher Stoffe in einer Postsendung umfassend einen Spektralapparat (2) und eine Aufnahmeeinrichtung (10) mit einem Tisch (13) für die Postsendung, wobei der Tisch (13) und/oder der Spektralapparat (2) in X- und Y-Richtung verfahrbar in der Vorrichtung angeordnet sind.

4. Vorrichtung nach Anspruch 3,
**dadurch gekennzeichnet,**
**dass** die Vorrichtung eine Durchleuchtungseinrichtung für die Postsendung aufweist.

5. Vorrichtung nach Anspruch 4,
**dadurch gekennzeichnet,**
**dass** die Durchleuchtungseinrichtung als Röntgeneinrichtung oder als Millimeterwellenscanner (1) ausgebildet ist.

6. Vorrichtung nach einem der Ansprüche 3 bis 5,
**dadurch gekennzeichnet,**
**dass** die Vorrichtung eine Einrichtung zur Darstellung der durchleuchteten Postsendung aufweist.

7. Vorrichtung nach einem der Ansprüche 3 bis 6,
**dadurch gekennzeichnet,**
**dass** der Tisch (13) für die Postsendung durch die Aufnahmeeinrichtung in der Vorrichtung in den Erfassungsbereich sowohl des Spektralapparates (2) als auch der Durchleuchtungseinrichtung verfahrbar ist.

8. Vorrichtung nach einem der Ansprüche 3 bis 7,
**dadurch gekennzeichnet,**
**dass** der Tisch (13) in Z-Richtung verfahrbar ist.
